# EUROPEAN PATENT APPLICATION

(11) **EP 3 640 915 A1**
(43) Date of publication of application: **22.04.2020**
(21) Application number: 19204155.6
(22) Date of filing: 18.10.2019
(51) Int. Cl.: G08G 1/0967, G08G 1/16

(54) **UAV NETWORK ASSISTED SITUATIONAL SELF-DRIVING**

(30) Priority: 18.10.2018 US 201816164757
(71) Applicant: Sham, Wellen, Taipei City (TW)
(72) Inventor: Sham, Wellen, Taipei City (TW)
(74) Representative: Sadler, Peter Frederick

(57) **Abstract**

Embodiments are provided for methods and systems for facilitating traveling or operation of one or more driving apparatuses. The methods and systems may be implemented in one or more processors configured to execute programmed components. The methods may include receiving a first operating parameter of a first driving apparatus from the first driving apparatus via an unmanned aerial vehicle (UAV) network. The methods may also include receiving a first driving condition from the UAV network. The methods may further include generating a first instruction for adjusting the operation of the first driving apparatus based on at least one of the first operating parameter or the first driving condition. The methods may also include transmitting the first instruction to the first driving apparatus via the UAV network.

## Description

### BACKGROUND

The present disclosure relates to facilitating self-driving through unmanned aerial vehicle, and more specifically to facilitating situational self-driving through unmanned aerial vehicle.

An unmanned aerial vehicle (UAV), commonly known as a drone, is an aircraft without a human pilot aboard. The flight of UAVs may be controlled either autonomously by onboard computers or by the remote control of a pilot on the ground or in another vehicle. UAVs have mostly found military and special operation applications, but also are increasingly finding uses in civil applications, such as policing, surveillance, and firefighting, and nonmilitary security work, such as inspection of power or pipelines. UAVs are adept at gathering an immense amount of visual information and displaying it to human operators.

Driverless or self-driving vehicles are generally known in the art. When an obstacle is detected in the traveling path of a self-driving vehicle, the self-driving vehicle needs to adjust the maneuvering of the vehicle accordingly to avoid the obstacle detected. Conventional technologies generally involve long processing time and thus often are insufficient for dealing with changes in roads or driving conditions.

### SUMMARY

Embodiments are provided for methods for facilitating traveling or operation of one or more driving apparatuses. The methods may be implemented in one or more processors configured to execute programmed components. In some embodiments, the method may include receiving a first operating parameter of a first driving apparatus from the first driving apparatus via an unmanned aerial vehicle (UAV) network. The methods may also include receiving a first driving condition from the UAV network. The methods may further include generating a first instruction for adjusting the operation of the first driving apparatus based on at least one of the first operating parameter or the first driving condition. The methods may also include transmitting the first instruction to the first driving apparatus via the UAV network.

In some embodiments, the method may further include receiving a second operating parameter of a second driving apparatus from the second driving apparatus via the UAV network. The method may also include receiving a second driving condition from the UAV network. The method may further include generating a second instruction for adjusting the operation of the second driving apparatus based on at least one of the second operating parameter or the second driving condition. The method may also include transmitting the second instruction to the second driving apparatus via the UAV network. In some embodiments, the first driving condition and the second driving condition may include same driving condition information.

In some embodiments, the method may further include receiving a second instruction by a human operator for adjusting the operation of the first driving apparatus. The method may also include transmitting the second instruction in real time to the first driving apparatus for adjusting the operation of the first driving apparatus.

In some embodiments, the method may further include determining an area relevant to the operation of the first driving apparatus based on the first operating parameter. Receiving the first driving condition from the UAV network may include receiving the first driving condition of the area. In some embodiments, the UAV network may include a plurality of UAVs. At least one of the UAVs may be configured to collect images and/or videos indicative of the first driving condition. In some embodiments, the first driving condition may be indicative of an obstacle ahead of the first driving apparatus along a traveling route of the first driving apparatus. The first driving condition may be indicative of at least one of a distance of the obstacle from the first driving apparatus or an angle of the obstacle with respect to a traveling direction of the first driving apparatus.

In some embodiments, the first operating parameter may be indicative of at least one of a traveling route, a traveling destination, a traveling speed, or a traveling direction of the first driving apparatus. In some embodiments, the first instruction may include at least one of an adjustment to a traveling speed of the first driving apparatus or an adjustment to a traveling direction of the first driving apparatus.

Embodiments are provided for systems for facilitating traveling or operation of one or more driving apparatuses. The systems may include one or more processors configured to execute programmed components. In some embodiments, the one or more processors may be configured to perform receiving a first operating parameter of a first driving apparatus from the first driving apparatus via an unmanned aerial vehicle (UAV) network. The one or more processors may be also configured to perform receiving a first driving condition from the UAV network. The one or more processors may be further configured to perform generating a first instruction for adjusting the operation of the first driving apparatus based on at least one of the first operating parameter or the first driving condition. The one or more processors may be also configured to perform transmitting the first instruction to the first driving apparatus via the UAV network.

In some embodiments, the one or more processors may be configured to perform receiving a second operating parameter of a second driving apparatus from the second driving apparatus via the UAV network. The one or more processors may be also configured to perform receiving a second driving condition from the UAV network. The one or more processors may be further configured to perform generating a second instruction for adjusting the operation of the second driving apparatus based on at least one of the second operating parameter or the second driving condition. The one or more processors may be also configured to perform transmitting the second instruction to the second driving apparatus via the UAV network. In some embodiments, the first driving condition and the second driving condition may include same driving condition information.

In some embodiments, the one or more processors may be further configured to perform receiving a second instruction by a human operator for adjusting the operation of the first driving apparatus. The one or more processors may be also configured to perform transmitting the second instruction in real time to the first driving apparatus for adjusting the operation of the first driving apparatus.

In some embodiments, the one or more processors may be further configured to perform determining an area relevant to the operation of the first driving apparatus based on the first operating parameter. Receiving the first driving condition from the UAV network may include receiving the first driving condition of the area. In some embodiments, the UAV network may include a plurality of UAVs. At least one of the UAVs may be configured to collect images and/or videos indicative of the first driving condition. In some embodiments, the first driving condition may be indicative of an obstacle ahead of the first driving apparatus along a traveling route of the first driving apparatus. The first driving condition may be indicative of at least one of a distance of the obstacle from the first driving apparatus or an angle of the obstacle with respect to a traveling direction of the first driving apparatus.

In some embodiments, the first operating parameter may be indicative of at least one of a traveling route, a traveling destination, a traveling speed, or a traveling direction of the first driving apparatus. In some embodiments, the first instruction may include at least one of an adjustment to a traveling speed of the first driving apparatus or an adjustment to a traveling direction of the first driving apparatus.

The methods and systems described herein vastly increase the area, the driving conditions of which may be collected and utilized for facilitating the traveling or operation of one or more driving apparatuses. The methods and systems described herein further provide ample time for each driving apparatus to respond to and deal with any driving conditions. Other objects and advantages of the invention will be apparent to those skilled in the art based on the following drawings and detailed description.

### BRIEF DESCRIPTION OF THE DRAWINGS

The accompanying drawings, which are included to provide a further understanding of the invention, are incorporated in and constitute a part of this specification, illustrate embodiments of the invention and together with the detailed description serve to explain the principles of the invention. No attempt is made to show structural details of the invention in more detail than may be necessary for a fundamental understanding of the invention and various ways in which it may be practiced.
FIG. 1 illustrates an exemplary UAV network in accordance with the disclosure.
FIG. 2 illustrates exemplary system and scenario where the traveling or operation of one or more driving apparatuses may be facilitated in accordance with the disclosure.
FIG. 3 illustrates another exemplary scenario where the traveling or operation of a driving apparatus may be facilitated in accordance with the disclosure
FIG. 4 illustrates schematically an exemplary central processing station shown in FIG. 2.
FIG. 5 illustrates schematically an exemplary vehicle the traveling or operation of which may be facilitated in accordance with the disclosure.
FIG. 6 illustrates an exemplary method for facilitating the traveling or operation of one or more driving apparatuses in accordance with the disclosure.
FIG. 7 illustrates a simplified computer system in accordance with an exemplary embodiment of the present disclosure.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION OF THE INVENTION

Various specific embodiments of the present disclosure will be described below with reference to the accompanying drawings constituting a part of this specification. It should be understood that, although structural parts and components of various examples of the present disclosure are described by using terms expressing directions, e.g., "front", "back", "upper", "lower", "left", "right" and the like in the present disclosure, these terms are merely used for the purpose of convenient description and are determined on the basis of exemplary directions displayed in the accompanying drawings. Since the embodiments disclosed by the present disclosure may be set according to different directions, these terms expressing directions are merely used for describing rather than limiting. Under possible conditions, identical or similar reference numbers used in the present disclosure indicate identical components.

UAVs are well suited for applications where the payload consists of optical image sensors such as cameras with powerful lightweight sensors suited for a variety of commercial applications such as surveillance, videos conferencing, vehicle positioning, and/or any other applications. A UAV in accordance with the disclosure may collect multi-spectral imagery of any object in an area covered by the UAV. In certain embodiments, the UAV in accordance with the disclosure may fly up to 65,000 feet and may cover as much as 500 km in range. UAVs may be employed to facilitate driver-less or self-driving involving at least one driving apparatus, such as an automobile, a bus, or a train. One or more UAVs may be employed to capture images and/or videos of road or driving conditions or changes thereof that may affect the traveling or operation of the driving apparatus.

Since UAVs may be configured to move at any suitable speed, including moving at a speed consistent with the speed of a driving apparatus, images and/or videos of the driving conditions may be captured by a UAV configured to remain in the vicinity of the driving apparatus. The UAV may be equipped with wide-view or 360-degree, cameras, and may be used to capture wide-view images and/or videos of the surroundings of the driving apparatus. Alternatively, a UAV network including multiple UAVs may be utilized for monitoring driving conditions by capturing images and/or videos thereof for one or more driving apparatuses. The UAVs of the UAV network may be configured to communicate with each other and/or the driving apparatuses. The UAV network may include one or more UAVs configured to monitor the driving conditions of the vicinity of the driving apparatuses. The UAV network may also include one or more UAVs configured to monitor the driving conditions of areas further away from the driving apparatuses. Utilizing a UAV network to capture images and/or videos of the driving conditions may vastly increase the area the driving conditions of which may be monitored, which may provide ample time for each driving apparatus to respond to and deal with any driving conditions.

The one or more UAVs of the UAV network may be configured to communicate the information gathered on driving conditions to each other and to a central processing station. The central processing station may process the information gathered and generate one or more traveling or operation adjustments for each of the driving apparatuses based on the driving condition information gathered. The one or more traveling or operation adjustments may be relayed backed to each driving apparatus to adjust the traveling or operation of the driving apparatus. This way, the traveling or operation of the driving apparatuses may be facilitated.

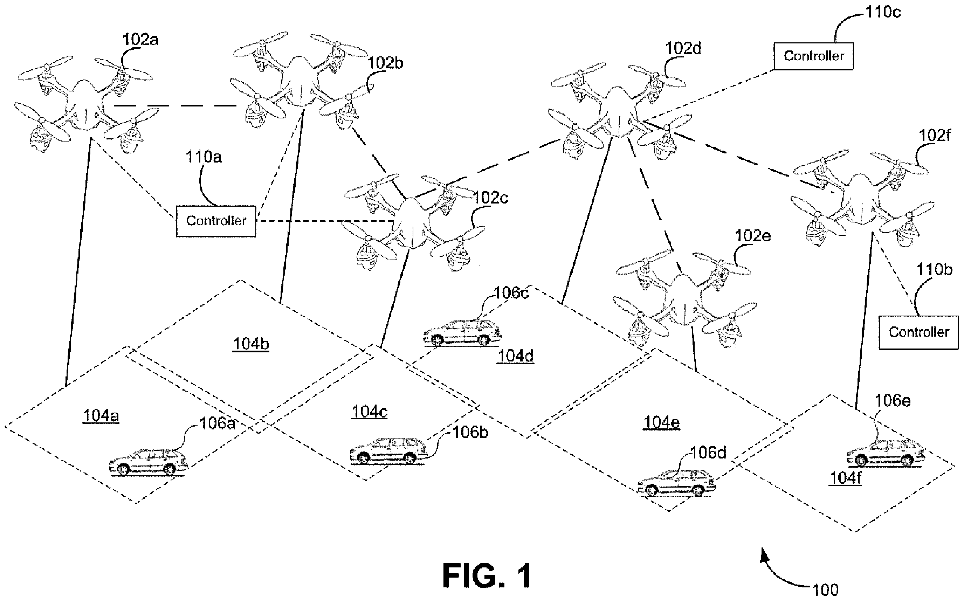

**FIG.** 1 illustrates an exemplary UAV network 100 for facilitating traveling or operation of one or more driving apparatuses in accordance with the disclosure. As shown, the UAV network 100 may include multiple UAVs 102, such as UAVs 102a-f. It should be understood the UAV network 100, in certain embodiments, may include hundreds, thousands, or even tens of thousands of UAVs 102. The individual UAVs 102 in the UAV network 100, such as UAV 102a, may fly above the ground, between 50,000 to 65,000 feet altitude. However, this is not intended to be limiting. In some examples, some or all of the UAVs 102 in the UAV network 100 may fly at hundreds or thousands feet above the ground. As shown, the individual UAVs 102 in the UAV network 100 may communicate with each other through communication hardware carried by or installed on UAVs 102. For example, the communication hardware onboard a UAV 102 may include an antenna, a high frequency radio transceiver, an optical transceiver, and/or any other communication components for long range communications. A communication channel between any two given UAVs 102 in the UAV network 100 may be established.

One way of establishing a communication channel between any two given UAVs 102 is to have them autonomously establish the communication channel through the communication hardware onboard the two given UAVs 102. Any two given UAVs 102 may be configured to communicate with each other when they may be within a threshold distance. The threshold distance may be the maximum communications range of the transceivers onboard the UAVs 102. In this way, the two given UAVs 102 may send data to each other without an access point.

Another way of establishing a communication channel between any two given UAVs 102 in the UAV network 100 is to have them establish communication channel through a controller 110. As used herein, a controller 110 may be referred to as a piece of hardware and/or software configured to control communications within the UAV network 100. The controller 110 may be provided by a ground processing station, such as ground controller 110a, 110b, or 110c. For instance, the controller 110 may be implemented by a computer server housed in the controller 110. In certain implementations, the controller 110 may be provided by a UAV 102 in the UAV network 100. For instance, a given UAV 102, such as an unmanned helicopter or a balloon, in the UAV network 100 may carry payloads including one or more processors configured to implement the controller 110. In any case, the controller 110 may be configured to determine network requirements based on an application supported by the UAV network 100, and/or to perform any other operations. In implementations, control signals may be transmitted via a control link from the controller 110 to the UAVs 102 shown in FIG. 1.

As mentioned above, an important criteria to a UAV 102 in the UAV network 100 is altitude. However, as the UAV 102 altitude increases, the signals emitted by UAV 102 may become weaker. A UAV 102 flying at an altitude of 65,000 feet may cover an area up to 100 kilometers on the ground, but the signal loss may be higher than would occur for a terrestrial network. Radio signals may typically require a large amount of power for transmission in long distance. On the other end, the payloads carried by a UAV 102 that may stay in the air for an extended period of time may be limited. Solar energy may be used to power a UAV 102. However, this may limit the weight of payloads that may be carried by a UAV 102 due to the limited rate at which solar irritation may be absorbed and converted to electricity.

Free-space optical communication (FSO) is an optical communication technology that transmits light in free space to wirelessly transmit data for telecommunications. Commercially available FSO systems may use wave length close to visible spectrum around 850 to 1550 nm. In a basis point-to-point FSO system, two FSO transceivers may be placed on both sides of transmission path that may have unobstructed line-of-sight between the two FSO transceivers. A variety of light sources may be used for the transmission of data using FSO transceivers. For example, LEDs or lasers may be used to transmit data in an FSO system. Lasers used in FSO systems may provide extremely high bandwidths and capacity, on par with terrestrial fiber optic networks, and they may also consume much less power than microwave systems.

An FSO unit may be included in the payloads of a UAV 102 for communication. The FSO unit may include an optical transceiver with a laser transmitter and a receiver to provide full duplex bi-directional capability. The FSO unit may use a high-power optical source, such as laser, and a lens to transmit the laser beam through the atmosphere to another lens receiving the information embodied in the laser beam. The receiving lens may connect to a high-sensitivity receiver via optical fiber. The FSO unit included in a UAV 102 in accordance with the disclosure may enable optical transmission at speeds up to 10Gbps. The controllers 110 may also include an FSO unit configured to establish a communication channel through laser beams. Through the communication channel established, the UAVs 102 may be configured to communicate their respective geo-locations to one or more controllers 110. Since the ground controllers 110 may be stationary, the geo-location of the ground controllers 110 may be preconfigured into an onboard computer in the UAVs 102.

Also shown in FIG. 1 are driving apparatuses. The driving apparatus may include any driving apparatus that moves in distance, such as vehicles 106a-e. Although cars are illustrated as examples, this is not intended to be limiting. Examples of driving apparatuses may include a vehicle such as a car, a bus, a train, a truck, a tram, or any other type of vehicle; may include a vessel such as a boat, a ship, a barge, a ferry or any other type of watercraft; may include an aircraft such as an airplane, a spaceship, or any other type of aircraft; or may include any other transportation apparatus. In some embodiments, the driving apparatus may include an autonomous driving apparatus that may be fully maneuvered by an onboard control system. In some embodiments, the driving apparatus may be operated by one or more human operators. The methods and systems herein may assist the human operators in operating the driving apparatus.

The vehicles 106 may be equipped with communication hardware. The communication hardware in a given vehicle 106 may include an FSO unit described above, a radio transceiver, and/or any other type of communication hardware. The communication hardware included in the vehicles 106 may be used to establish a communication channel between the vehicles 106 and the UAVs 102. For example, any vehicle 106 may be configured to communicate with any UAV 102 once the vehicle 106 and the UAV 102 may be within a threshold distance. The threshold distance may be the maximum communications range of the transceivers onboard the UAV 102 and the vehicle 106. As discussed above, communication may be established among multiple UAVs 102 autonomously or through the controllers 110. In other words, communication may be established throughout the entire UAV network 100. Thus, through the UAV network 100, communication may be established between any vehicle 106 and any UAV 102 or between any vehicle 106 and any controller 110 even when a particular vehicle 106 and a particular UAV 102 or a particular vehicle 106 and a particular controller 110 may not be within the communication range of each other. Further, communication between any vehicle 106 and other parties that may be configured to communicate with the UAV network 100 may also be established.

Through the communication channel established between the vehicles 106 and the UAVs and/or the controllers 110, information intended for the vehicles 106 may be forwarded to the vehicles 106. Additionally, because the ground controller 110 may be connected to a wired or wireless network, information intended for the driving apparatuses may be communicated through the wired or wireless network from or to another entity connected to the wired or wireless network. For example, the information intended for the vehicles 106 may be communicated to one or more of the UAVs 102 and/or the controllers 110 through laser beams, and the UAVs 102 and/or the controllers 110 may forward the information to the vehicles 106 through laser beams.

As is also shown in FIG. 1, any one of the UAVs 102 may be configured or instructed to "monitor" or to "zoom-in onto" an area 104 for driving conditions that may affect the traveling or operation of the vehicles 106. For achieving this, each of the UAVs 102 may be equipped with one or more cameras. In some embodiments, the cameras carried by the UAVs 102 may include wide-view cameras capable of capturing a wide field of view. The wide-view cameras carried by the UAVs 102 may include omnidirectional cameras with a 360-degree field of view in a horizontal plane, or with a visual field that covers approximately the entire sphere. In some implementations, individual cameras carried by the UAVs 102 may have panoramic view capability. For example, various types of panoramic view cameras may be carried by the UAVs 102, including short rotation, full rotation, fixed lens, or any other types of panoramic view cameras. In some embodiments, the cameras carried by a UAV 102 may include multiple cameras disposed at an underbody of the UAV 102. The multiple cameras may be arranged on the underbody of the UAV 102 to form a ring. In one configuration, eight cameras may be used to form such a ring.

The area 104 being monitored may be referred to as a monitoring area or coverage area 104. For example, as shown in FIG. 1, each of the UAVs 102a-f may be configured or instructed to monitor the driving conditions in a coverage area 104a-104f, respectively. Each coverage areas 104 may be predetermined based on the arrangement of the roads in the area, terrain of the area, traffic patterns of the area, or a number of other factors. Accordingly, the sizes and/or shapes of the coverage areas 104 may vary from each other. Although FIG. 1 shows one UAV 102 for each coverage area 104, more than one UAV 102 may be configured or instructed to monitor each area 104. This way, if one or more UAVs 102 may be configured or instructed to perform a different function or task that may move the one or more UAVs 102 outside a particular coverage area 104, that particular coverage area 104 may still be monitored by other UAVs 102. Additionally, each UAV 102 may be configured or instructed to monitor more than one coverage area 104. For example, a UAV 102 may be configured or instructed to monitor one coverage area 104 and then may be configured or instructed to move to and monitor a different coverage area 104. Alternatively, if more than one coverage area 104 may be located within the reach or capabilities of the sensors of a UAV 102, then the UAV 102 may be configured to monitor all or select coverage areas 104 within its sensor capabilities.

In some implementations, the coverage areas 104 may be dynamically determined and adjusted based on the reach or capabilities of the image sensors of the UAVs 102, as well as the availability of the UAVs 102. For example, the controllers 110 may be configured to track the geo-locations of the UAVs 102. Given the sensor capabilities or reach of each UAV 102 and their respective geo-locations, an overall coverage area 104 that may be monitored by the UAV network 100 may be determined. To limit or prevent any gap area, i.e., an area that is not being monitored by any UAVs 102, the controllers 110 may be configured to instruct one or more UAVs 102 to move to and monitor a different area. Such adjustment or instructed movement of the one or more UAVs 102 may occur when the controllers 110 may determine that a gap area may come into existence due to movement of the UAVs 102 for any reason. Such adjustment or instructed movement of the one or more UAVs 102 may also occur when the controllers 110 may determine that the availability or density of UAVs 102 in a particular region may be low even when there may be no gap area.

The driving conditions that the UAVs 102 may monitor may include both conditions or situations within a vicinity of the vehicles 106 and conditions or situations further away from the vehicles 106. The monitored driving conditions may include obstacles that the vehicles 106 may need to go around or avoid immediately, such as other vehicles, persons, bicycles, animals, or any objects obstructing the passage of the vehicle 106. The monitored driving conditions may further include obstacles or situations that may not require immediate handling by the vehicles 106 but appropriate actions taken in advance may improve the overall riding experience of the passengers. Such driving conditions may include road construction, accidents, traffic jams, and so on. Such driving conditions may also include weather conditions, such as snow, rain, fog, and so on along the route the vehicles 106 may take. The monitored driving conditions may further include instructions that the vehicles 106 may need to follow, such as traffic signs, including but not limited to, stop signs, yield signs, turning signs, speed limit, and so on. The monitored driving conditions may further include information that the vehicles 106 may utilize, such as charging station locations, rest stop locations, and so on. The monitored driving conditions listed herein are intended to be illustrative and not intended to be limiting. Therefore, the driving conditions that the UAVs 102 may monitor may include any conditions or situations that may trigger, result in, or lead to an adjustment to the operation of the vehicles 106.

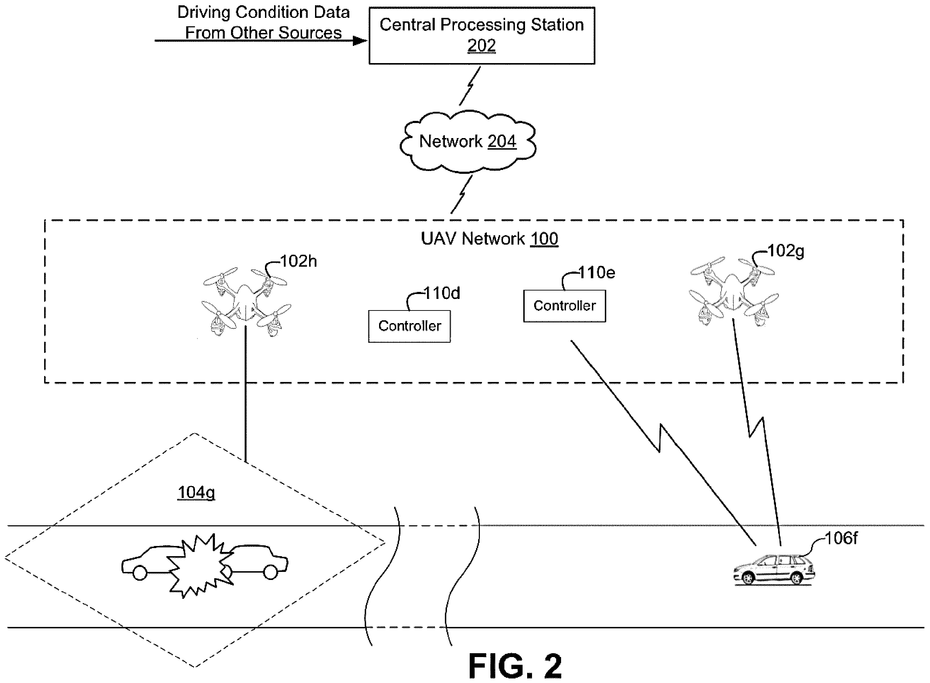

With the UAV network 100 having been generally described, attention is now directed to FIG. 2, which conceptually illustrates facilitating self-driving using the UAV network 100 in accordance with the disclosure. As is shown in FIG. 2, a UAV network, such as the UAV network 100 shown in FIG. 1, may be configured to communicate with a central processing station 202 via a network 204, which may include a wired and/or a wireless network, such as the Internet. The UAV network 100 may be configured to communicate information gathered on driving conditions to the central processing station 202. For example, a UAV 102h of the UAV network 100 may be configured to monitor a coverage area 104g to obtain information on the driving conditions in the coverage area 104g. The UAV 102h may obtain information on the driving conditions by taking images and/or videos of the coverage area 104g utilizing one or more sensors the UAV 102h may be equipped with. The information on the driving conditions may then be communicated to the central processing station 202 via the network 204. In some embodiments, the information on the driving conditions of the coverage area 104g may be first communicated from the UAV 102h to a controller 110d if a communication channel has been established between the UAV 102h and the controller 110d. The controller 110d may include a ground controller 110 or a UAV 102 in the UAV network 100. Upon receipt of the driving conditions of the coverage area 104g, the controller 110d may communicate such information to the central processing station 202 via the network 204. In some embodiments, the UAV 102h may be configured to communicate the information on the driving conditions directly from the UAV 102h to the central processing station 202 via the network 204. Although only one coverage area 104g is shown in FIG. 2, as already been discussed with reference to FIG. 1, the UAV network 100 may be configured to monitor the driving conditions of multiple coverage areas 104, and information on the driving conditions in all the monitored coverage areas 104 may be communicated to the central processing station 202, which may process and utilize the information on the driving conditions obtained to facilitate the operation of one or more vehicles 106.

With further reference to FIG. 2, the UAV network 100 may be also configured to communicate information related to one or more of the vehicles 106 to and from the central processing station 202. For example, a communication channel may be established between a vehicle 106f and a controller 110e, which may be a ground controller 110 or a UAV 102 in the UAV network 100. A communication channel may also be established between the vehicle 106f and a UAV 102g. Because the vehicle 106f may continue moving after the communication between the vehicle 106f and the UAV 102g may be established, in some implementations, the UAV 102g may be configured or instructed to follow the vehicle 106f so as to maintain the communication between the vehicle 106f and the UAV network 100. In some implementations, instead of following the vehicle 106f, the UAV 102g may be configured or instructed to transfer the communication with the vehicle 106f to another UAV 102 or a controller 110 so as to maintain the communication between the vehicle 106f and the UAV network 100. The controller 110d may also be configured to transfer the communication with the vehicle 106f to a UAV 102 or to another controller 110. Through the communication channel established and maintained between the vehicle 106f and one or more of the UAVs 102 and/or the controllers 110 of the UAV network 100, communication between the vehicle 106f and the central processing station 202 maybe established via the UAV network 100 and the network 204.

Once the communication between the vehicle 106f and the central processing station 202 may be established, operating parameters or vehicle parameters about the vehicle 106f may be transmitted from the vehicle 106f to the central processing station 202. The vehicle parameters about the vehicle 106f may include traveling parameters of the vehicle 106f, such as traveling speed, traveling direction, traveling destinations, traveling route, and so on. The vehicle parameters about the vehicle 106f may also include status parameters of the vehicle 106f, such as fuel level or charge level, engine conditions, tire pressure, and so on. Upon receiving the vehicle parameters, the central processing station 202 may utilize such information to facilitate the traveling or operation of the vehicle 106f (discussed below). The traveling parameters and status parameters are described herein as examples and are not intended to be limiting. Any information that may be utilized to facilitate the traveling or operation of the vehicle 106f may be transmitted from the vehicle 106f to the central processing station 202. Although only one vehicle 106f is shown in FIG. 2, the traveling or operation of multiple vehicles 106 may be facilitated simultaneously by the central processing station 202 based on the some or different driving conditions from one or multiple coverage areas 104.

To facilitate the traveling or operation of one or more vehicles 106, the central processing station 202 may be configured to process information about the vehicle parameters of one or more vehicles 106 and to process information about the driving conditions of one or more coverage areas 104 received from the UAV network 100. Continuing with the example of the vehicle 106f, upon receipt of the vehicle parameters of the vehicle 106f, the central processing station 202 may determine the coverage areas 104 that may be relevant to the traveling or operation of the vehicle 106f. For example, based on the traveling parameters, such as traveling destination or traveling route of the vehicle 106f, the central processing station 202 may determine the coverage areas 104 along and/or near the traveling route and/or the traveling destination to be relevant to the vehicle 106f. As another example, based on the status parameters, such as fuel or charge level and/or tire pressure of the vehicle 106f, the central processing station 202 may determine the coverage areas 104 that may include fuel or charging stations, rest stops, auto service shops, and so on to be relevant. Accordingly, the central processing station 202 may determine the coverage area 104g shown in FIG. 2 to be one of the coverage areas 104 relevant to vehicle 106f because the central processing station 202 may determine the coverage area 104g to be along or near the traveling route of the vehicle 106f. Although only one relevant coverage area 104g is shown in FIG. 2, it should be understood that more than one coverage areas 104 may be relevant to the traveling or operation of the vehicle 106f. Once the central processing station 202 determines the relevant coverage areas 104, the central processing station 202 may communicate with the UAV network 100 and obtain the driving conditions of the relevant coverage areas 104 being monitored by one or more of the UAVs 102. The central processing station 202 may then generate one or more traveling or operation adjustments for the vehicle 106f based on the driving conditions received to facilitate the traveling or operation the vehicle 106f.

In some implementations, the central processing station 202 may first process or analyze the driving conditions received so as to determine whether the traveling or operation condition of the vehicle 106f may be adjusted. The processing or analysis may include comparing the driving conditions obtained at any given time with the driving conditions obtained at an earlier time, such the driving conditions obtained 5 minutes earlier, 1 minutes earlier, 30 seconds earlier, 10 seconds earlier, 5 seconds earlier, 3 seconds earlier, 1 seconds earlier, less than 1 second earlier, and so on. The time intervals between the driving conditions being compared may be determined based on the distance of the relevant coverage areas 104 from the vehicle 106f. For example, if the coverage areas 104 may be with the vicinity of the vehicle 106f, then the time interval may be less than a few seconds. As the distances of the relevant coverage areas 104 from the vehicle 106f increase, the time interval may be increased from a few seconds, to a few minutes, to a few hours, and so on. Based on the comparison between the driving conditions separated by appropriate time intervals, the central processing station 202 may determine whether the traveling or operation of the vehicle 106f may be adjusted.

In some implementations, instead of or in addition to comparing driving conditions at different times, the central processing station 202 may be configured to recognize driving conditions that may trigger an adjustment to the traveling or operation of the vehicle 106f based on the real-time driving conditions received. For example, the central processing station 202 may include processing or analysis component that may be configured to recognize accidents, traffic jams, road blocks, or other obstacles based on the images and/or videos collected by the UAVs 102. Optionally and additionally, one or more human operators at the central processing station 202 may review or monitor the driving conditions and may make determinations as to whether the driving or operating of the vehicle 106f may be adjusted.

Once the central processing station 202 may determine that an adjustment to the traveling or operation of the vehicle 106f may be made to facilitate the traveling or operation of the vehicle 106f, the central processing station 202 may generate one or more such adjustments and transmit the generated adjustments to the vehicle 106f through the network 204 and the UAV network 100. The generated traveling or operation adjustments may include adjustments to the traveling speed, traveling direction, traveling route, even traveling destination when appropriate, or any other suitable traveling or operation adjustments. In some implementations, the traveling or operation adjustments may be generated by the central processing station 202 automatically through one or more of computing devices. The generated traveling or operation adjustments may include traveling or operation instructions that the vehicle 106f may execute through one or more control components the vehicle 106f may be equipped with. In some implementations, one or more human operators at the central processing station 202 may take over the traveling or operation of the vehicle 106f and may operate or control the vehicle 106f remotely.

Continuing with the example of the coverage area 104g, the UAV 102h may capture images and/or videos of an accident in the coverage area 104g and transmit the images and/or videos captured to the central processing station 202. Based on the images and/or videos of the accident, the central processing station 202 may determine that the vehicle 106f may be rerouted to its traveling destination so as to avoid any delay the accident may cause. Such rerouting may be completed by generating one or more traveling or operation adjustments by the central processing station 202 to be transmitted to the vehicle 106f for the vehicle 106f to adjust its traveling or operation. Alternatively, such rerouting may be performed by one or more of the human operators at the central processing station 202 taking over control of the vehicle 106f.

Adjusting the traveling or operation of the vehicle 106f as described herein may provide the advantage of offering ample time for the vehicle 106f to respond to and deal with any driving conditions because the UAV network 100 may monitor driving conditions of coverage areas 104 that may be tens, hundreds, or even thousands of miles away from the current position of the vehicle 106f. In other words, even though the driving conditions that may affect the traveling or operation of the vehicle 106f may be at a location far beyond the detection capability of the vehicle 106f or any driver or passengers onboard the vehicle 106f, the UAV network 100 may transmit those driving conditions to the central processing station 202 in real time and the central processing station 202 may adjust the traveling or operation of the vehicle 106f immediately upon detection of such driving conditions. Without the UAV network 100, the vehicle 106f may not obtain any information about the driving conditions that may affect the traveling or operation of the vehicle 106 until the vehicle 106f approaches such driving condition, such as the accident discussed above with reference to FIG. 2. Then it may be too late for the vehicle 106f to adjust its operation to avoid any delay that may be caused by the accident. With the UAV network 100, upon detection of such accident or any other driving conditions that may affect the traveling or operation of the vehicle 106f, the central processing station 202 may immediately process such driving conditions and utilize them to adjust the traveling or operation of the vehicle 106f. This way, the traveling or operation of the vehicle 106f may be facilitated by the central processing station 202 with the assistance of the UAV network 100.

Although an accident is discussed herein as an example, other driving conditions, such as traffic jams, road constructions, weather conditions, or any other conditions that may adversely affect the traveling or operation of the vehicle 106f may be transmitted to the central processing station 202 via the UAV network 100 and utilized by the central processing station 202 to generate one or more traveling or operation adjustments to facilitate the traveling or operation of the vehicle 106f. Other conditions, such as nearby fuel or charging stations, rest stops, auto service shops, and so on, that may facilitate the operation or traveling of the vehicle 106f or passengers onboard may also be transmitted to and utilized by the central processing station 202 to generate one or more traveling or operation adjustments for the vehicle 106f.

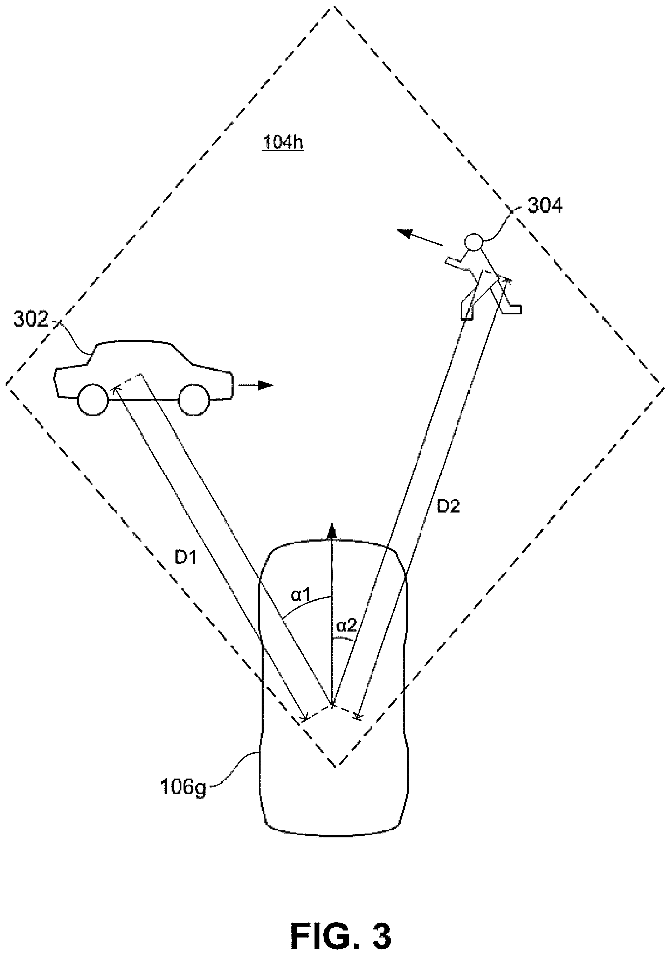

Attention is now directed to **FIG. 3**, where an example of another scenario where the traveling or operation of vehicles may be facilitated. Shown in FIG. 3 is a coverage area 104h that one or more UAVs 102 of the UAV network 100 (not illustrated in FIG. 3) may monitor and that the central processing station 202 (not illustrated in FIG. 3) may determine to be relevant to the traveling or operation of a vehicle 106g. One difference between the coverage area 104h shown in FIG. 3 and the coverage area 104g shown in FIG. 2 may include the distances from the two coverage areas 104g, 104h to the vehicles 106f, 106g, respectively. The coverage area 104h shown in FIG. 3 may be much closer to the vehicle 106f as compared to the coverage area 104g to the vehicle 106g shown in FIG. 2. As discussed above, the driving conditions of the coverage area 104g may be beyond the detection capabilities of the vehicle 106f or any passengers may be onboard the vehicle 106f. The driving conditions of the coverage area 104h shown in FIG. 3 may be within the detection capabilities of the vehicle 106g or the passengers onboard. However, the driving conditions may happen suddenly that even though the vehicle 106g or the passengers onboard may be able to detect such driving conditions but may not have the capabilities to respond to or deal with the driving conditions properly in time. In these situations, the central processing station 202 may assist the vehicle 106g in navigating through the driving conditions.

For example, as illustrated in FIG. 3, one or more moving objects may suddenly move toward or into the traveling path of the vehicle 106g. The one or more moving objects may include a moving vehicle 302, a running child 304, and so on. The one or more UAVs 102 configured or instructed to monitor the coverage area 104h may capture images and/or videos of the moving vehicle 302 and the running child 304 and transmitted the images and/or videos via the UAV network 100 to the central processing station 202. Based on the images and/or videos received, the central processing station 202 may determine one or more of the characteristics of the moving objects. For example, the central processing station 202 may determine the moving directions of the moving vehicle 302 and the running child 304, as illustrated by the respective arrows leading the moving vehicle 302 and the running child 304. The central processing station 202 may further determine that the moving vehicle 302 may be positioned at a distance of D1 from the vehicle 106g and at an angle of α1 with respect to the traveling direction of the vehicle 106g at a given time and may continue to track the distance and angle of the moving vehicle 302 with respect to the vehicle 106g. Similarly, the central processing station 202 may determine that the running child 304 may be positioned at a distance of D2 from the vehicle 106g and at an angle of α2 with respect to the traveling direction of the vehicle 106g at a given time and may continue to track the distance and angle of the running child 304 with respect to the vehicle 106g. Although not explicitly illustrated in FIG. 3, the central processing station 202 may further determine the moving speed of the moving vehicle 302 and the running child 304, respectively.

Based on the moving direction, moving speed, and/or the position of each of the moving objects, the central processing station 202 may generate one or more traveling or operation adjustments automatically using one or more its computing systems or devices. The one or more computing systems or devices at the central processing station 202 may include much higher computing capabilities than the control systems onboard the vehicle 106g such that although the control systems onboard the vehicle 106g may not be able to handle the driving conditions detected, the computing systems at the central processing station 202 may assist the vehicle 106g in navigating through various driving conditions detected, such as the moving objects shown in FIG. 3. The traveling or operation adjustments generated may include one or a combination of adjustments to the traveling speed of the vehicle 106g or adjustments to the traveling direction of the vehicle 106g. Accordingly, the vehicle 106g may implement the traveling or operation adjustments received from the central processing station 202 by making appropriate turns, accelerating or decelerating, making a complete stop, and so on. In further implementations, one or more human operators at the central processing station 202 may take over the control of the vehicle 106g in lieu of or in addition to the automatically generated traveling or operation adjustments to further assist the vehicle 106g in navigating through the moving objects or other driving conditions.

In the examples discussed above, the central processing station 202 may generate one or more traveling or operation adjustments based on the driving conditions received via the UAV network 100 concerning the relevant coverage areas 104. In some implementations, the central processing station 202 may be configured to receive driving conditions from other sources (see FIG. 2) and to combine the driving conditions of the relevant coverage areas 104 and the driving conditions received from other sources in generating the traveling or operation adjustments for one or more vehicles 106. The driving conditions from other sources may include road and/or traffic maps or live feed from other networks that may broadcast traffic and/or road conditions .

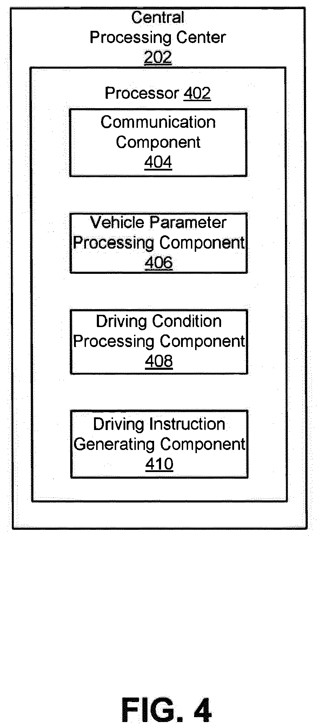

With reference to **FIG. 4**, an exemplary central processing station 202 will be described. As discussed above, the central processing station 202 may include one or more computing systems or devices, which may be implemented through a processor 402. The processor 402 may include a communication component 404 configured to communicate with the UAV network 100 via the network 204 as shown in FIG. 2 to receive the vehicle parameters from one or more vehicles 106 and the driving conditions of the relevant coverage areas 104 from the UAV network 100. The communication component 404 may be further configured to communicate with other sources, such as traffic or road condition broadcast stations, road and traffic map databases, and so on, for receiving additional driving condition information.

The processor 402 may also include a vehicle parameter processing component 406. The vehicle parameter processing component 406 may be configured to determine, based on the vehicle parameters received from one or more vehicles 106, one or more relevant coverage areas 104 to be monitored by the UAVs 102 of the UAV network 100 for facilitating the traveling or operation of the vehicles 106. For example, based on the vehicle parameters received, the vehicle parameter processing component 406 may determine areas near or along the traveling route of the vehicles 106, areas that include points of interest to the vehicles 1106 or the passengers onboard, or other areas to be relevant as discussed above.

The processor 402 may further include a driving condition processing component 408. The driving condition processing component 408 may be configured to process the images and/or videos taken by one or more of the UAVs 102. The driving condition processing component 408 may employ any suitable image or visual data processing techniques to process the images and/or videos taken by the UAVs 102. The driving condition processing component 408 may employ other processing techniques to analyze additional driving conditions from other sources, such as traffic or road maps or other forms of driving condition data. The driving condition processing component 408 may be further configured to determine whether the traveling or operation of the vehicles 106 may be affected by the driving conditions received and to determine whether any adjustment to the traveling or operation of one or more of the vehicles 106 may be made so as to avoid any undesirable consequences that may be caused by these driving conditions. For example, the driving condition processing component 408 may be configured to recognize the accident detected in the coverage area 104g, the moving objects in the coverage area 104h, and so on. The driving condition processing component 408 may be further configured to determine that adjustments may be made to traveling or operation of the vehicle 106 so as to avoid any delay that may be caused by the accident in the coverage area 104g, or to avoid hitting the moving vehicle 302 or the running child 304 in the coverage area 104h, and so on.

The processor 402 may further include a driving instruction generating component 410. The driving instruction generating component 410 may be configured to generate one or more traveling or operation adjustments discussed above based on the vehicle parameters and the driving conditions received. The driving instruction generating component 410 may include computing systems or devices that may be configured to execute preprogrammed components for generating the one or more traveling or operation adjustments automatically. In some implementations, the driving instruction generating components 410 may be configured to take inputs from one or more human operators at the central processing station 202 in generating one or more traveling or operation adjustments. In some implementations, the driving instruction generating components 410 may be configured to overwrite any automatically generated traveling or operation adjustments with one or more adjustments entered by the human operators. In other words, the driving instruction generating components 410 may function as a control component for the human operators to control the traveling or operation of the vehicles 106. The one or more traveling or operation adjustments generated either automatically by the driving instruction generating component 410 or entered by the human operators at the central processing station 202 may then be transmitted by the communication component 404 back to the vehicles 106 for facilitating the traveling or operation of the vehicles 106.

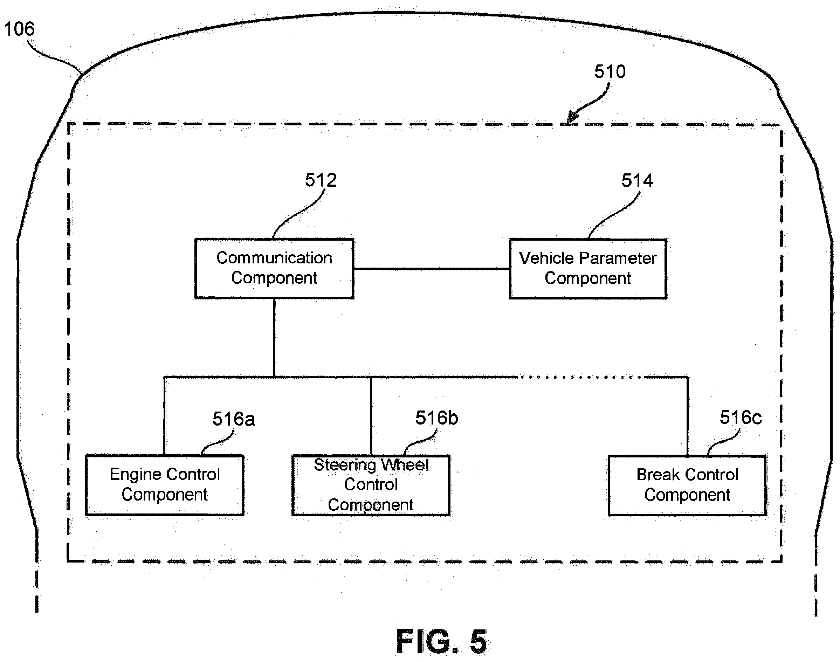

Attention is now directed to **FIG. 5**, which illustrates schematically an exemplary vehicle 106 the traveling or operation of which may be facilitated by the systems and methods described herein. The vehicle 106 may include an onboard control system 510 for driving or operating the vehicle 106. The onboard control system 510 may include a communication component 512 for communicating with the UAV network 100 and/or the central processing station 202 as discussed above. The communication component 512 may be configured to transmit the vehicle parameters of the vehicle 106 to the central processing station 202 via the UAV network 100. The communication component 512 may also be configured to receive the traveling or operation adjustments from the central processing station 202 via the UAV network 100. The communication component 512 may be further configured to transmit and/or receive any other information from and/or for the vehicle 106.

The onboard control system 510 may also include a vehicle parameter component 514 operably coupled with the communication component 512 and configured to gather vehicle parameters of the vehicle 106 for transmitting to the central processing station 202 via the communication component 512. As discussed above, the vehicle parameters of the vehicle 106 may include traveling parameters of the vehicle 106, such as traveling speed, traveling direction, traveling destinations, traveling route, and so on, may also include status parameters of the vehicle 106, such as fuel level or charge level, engine conditions, tire pressure, and so on, and may further include any other vehicle parameters of the vehicle 106.

The onboard control system 510 may further include one or more control components 516, such as an engine control component 516a, a steering wheel control component 516b, a break control component 516c, each of which may be operatively coupled with the communication component 512 for receiving one or more traveling or operation adjustments from the central processing station 202. Although FIG. 5 only illustrates the engine control component 516a, the steering wheel control component 516b, and the break control component 516c, the onboard control system 510 may further include additional control components 516 for controlling the operation of the vehicle, such as air bag control component, heating and cooling control component, window control component, and so on. Based on the traveling or operation adjustments received from the central processing station 202, one or more of the control components 516 may adjust the traveling or operation of the vehicle 106 accordingly.

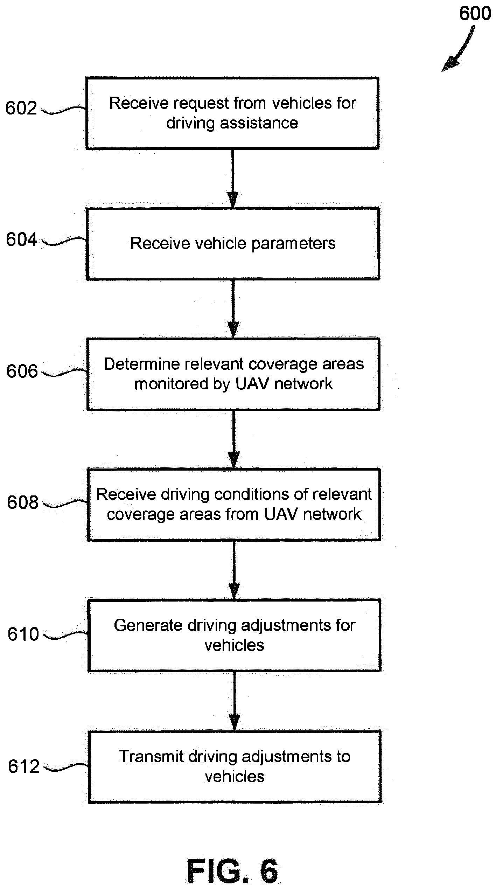

Attention is now directed to **FIG. 6** where an exemplary method 600 for facilitating the traveling or operation of one or more vehicles using a UAV network and a central processing station is illustrated. The particular series of steps depicted in FIG. 6 is not intended to be limiting. It is appreciated that the steps may be performed in an order different from that depicted in FIG. 6 and that not all the steps depicted in FIG. 6 need be performed. In certain implementations, the method 600 may be implemented by a central processing station with the assistance from a UAV network, such as the central processing station 202 and the UAV network 100 as discussed above with reference to FIGS. 1-4.

At 602, a central processing station, such as the central processing station 202, may receive requests from one or more driving apparatuses, such as a vehicle or the vehicles 106 described above, for assistance or facilitation of the traveling or operation of each of the vehicles. In some implementations, the requesting vehicles may transmit their respective requests to the central processing station via a UAV network, such as the UAV network 100. The UAV network may be configured to communicate with the central processing station via a wired or wireless network, such as the network 204 described above. In some implementations, one or more of the requesting vehicles may transmit their respective requests to the central processing station directly via the wired or wireless network, bypassing the UAV network.

At 604, the central processing station may receive vehicle parameters about each vehicle requesting assistance or facilitation of the traveling or operation of the vehicle. The vehicle parameters may include the vehicle parameters discussed above with reference to the vehicle parameters of the vehicle 106. Accordingly, the vehicle parameters may include traveling parameters of the vehicles, such as traveling speed, traveling direction, traveling destinations, traveling route, and so on, status parameters of the vehicles, such as fuel level or charge level, engine conditions, tire pressure, and so on, and other parameters of the vehicles. One or more of the vehicles may transmit their respective vehicle parameters to the central processing station via the UAV network and/or via the wired or wireless network directly.

At 606, based on the vehicle parameters received, the central processing station may determine areas the driving conditions of which may be relevant to or may affect the traveling or operation of the vehicles, such as areas along the traveling route of the vehicles, areas that include points of interest to the vehicles or the passengers onboard, or other areas. The areas determined to be relevant may include the coverage areas 104 discussed above the driving conditions of which may be monitored by one or more UAVs 102 of the UAV network 100. The areas determined to be relevant may also include areas the driving conditions of which may be monitored by other parties, or may include areas the driving conditions of which may be preprogrammed to one or more of the computing systems or devices of the central processing station.

At 608, the central processing station may obtain the driving conditions of the relevant areas. The central processing station may obtain the driving conditions from the UAV network. More specifically, the central processing station may obtain images and/or videos reflecting the driving conditions collected by one or more of the UAVs of the UAV network, similar to the images and/or videos captured by the UAVs 102 of the UAV network 100 discussed above. The central processing station may also obtain driving conditions from other sources in other formats, such as traffic data, road maps, weather information, and so on.

At 610, based on driving conditions received, the central processing station may determine whether the driving conditions may affect the traveling or operation of one or more of the vehicles. If so, the central processing station may generate one or more adjustments to the traveling or operation of the affected vehicles, similar to the one or more traveling or operation adjustments generated by the central processing station 202 for the vehicles 106 as discussed above. Accordingly, the traveling or operation adjustments may include rerouting the vehicles to avoid delays that may be caused by certain driving conditions, such as accidents, traffic jam, and so on, or to arrive at a point of interest, such as charge stations, rest stops, and so on. The traveling or operation adjustments may also include adjustments to the traveling speed and/or traveling direction of the vehicles so as to avoid any obstacles or moving objects that may move near or into the traveling path of the vehicles.

In some implementations, the central processing station may be configured to take inputs from one or more human operators at the central processing station in generating the one or more traveling or operation adjustments, similar to how the central processing station 202 may be configured to take inputs from one or more human operators as discussed above. Accordingly, the central processing station may be further configured to overwrite any automatically generated traveling or operation adjustments with one or more adjustments entered by the human operators. The central processing station may be further configured to allow the one or more human operators to take complete control over the traveling or operation of one or more of the vehicles.

At 612, the one or more traveling or operation adjustments generated either automatically by the central processing station or entered by the human operators at the central processing station may be transmitted to the vehicles for adjusting the traveling or operation of the vehicles, thereby facilitating the traveling or operation of the vehicles. The transmission of the traveling or operation adjustments from the central processing station to one or more of the vehicles may be facilitated via the UAV network similar to how the transmission of the traveling or operation adjustments from the central processing station 202 to the vehicles 106 may be performed as discussed above. In some implementations, the transmission of the traveling or operation adjustments from the central processing station to one or more of the vehicles may be performed through the wired or wireless internet, bypassing the UAV network. Upon receipt of the traveling or operation adjustments, the respective vehicles may adjust its traveling or operation accordingly.

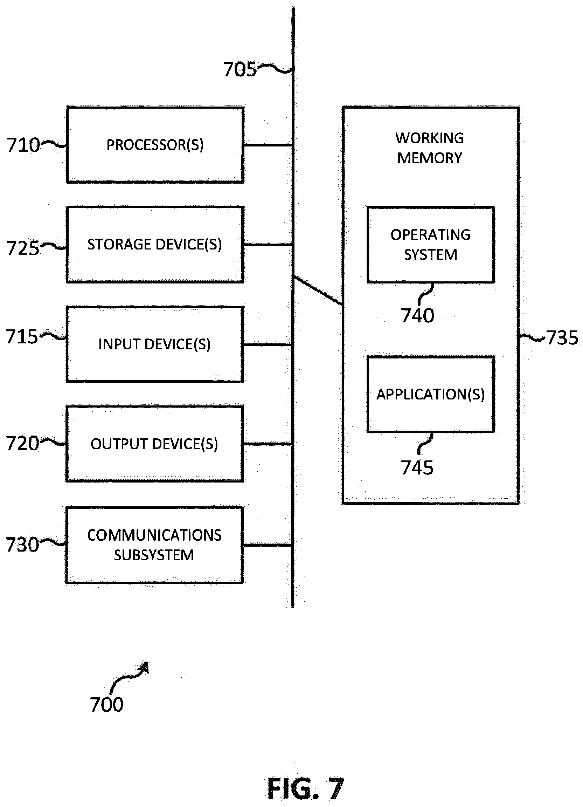

**FIG. 7** illustrates a simplified computing or computer system that may be used implement various embodiments described and illustrated herein. A computer system 700 as illustrated in FIG. 7 may be incorporated into devices such as a portable electronic device, mobile phone, or other device as described herein. FIG. 7 provides a schematic illustration of one embodiment of a computer system 700 that may perform some or all of the steps of the methods provided by various embodiments. It should be noted that FIG. 7 is meant only to provide a generalized illustration of various components, any or all of which may be utilized as appropriate. FIG. 7, therefore, broadly illustrates how individual system elements may be implemented in a relatively separated or relatively more integrated manner.

The computer system 700 is shown including hardware elements that may be electrically coupled via a bus 705, or may otherwise be in communication, as appropriate. The hardware elements may include one or more processors 710, including without limitation one or more general-purpose processors and/or one or more special-purpose processors such as digital signal processing chips, graphics acceleration processors, and/or the like; one or more input devices 715, which may include without limitation a mouse, a keyboard, a camera, and/or the like; and one or more output devices 720, which may include without limitation a display device, a printer, and/or the like.

The computer system 700 may further include and/or be in communication with one or more non-transitory storage devices 725, which may include, without limitation, local and/or network accessible storage, and/or may include, without limitation, a disk drive, a drive array, an optical storage device, a solid-state storage device, such as a random access memory ("RAM"), and/or a read-only memory ("ROM"), which may be programmable, flash-updateable, and/or the like. Such storage devices may be configured to implement any appropriate data storage, including without limitation, various file systems, database structures, and/or the like.

The computer system 700 might also include a communications subsystem 730, which may include without limitation a modem, a network card (wireless or wired), an infrared communication device, a wireless communication device, and/or a chipset such as a Bluetooth™ device, an 802.11 device, a WiFi device, a WiMax device, cellular communication facilities, etc., and/or the like. The communications subsystem 730 may include one or more input and/or output communication interfaces to permit data to be exchanged with a network such as the network described below to name one example, other computer systems, television, and/or any other devices described herein. Depending on the desired functionality and/or other implementation concerns, a portable electronic device or similar device may communicate image and/or other information via the communications subsystem 730. In other embodiments, a portable electronic device, e.g. the first electronic device, may be incorporated into the computer system 700, e.g., an electronic device as an input device 715. In some embodiments, the computer system 700 will further include a working memory 735, which may include a RAM or ROM device, as described above.

The computer system 700 also may include software elements, shown as being currently located within the working memory 735, including an operating system 740, device drivers, executable libraries, and/or other code, such as one or more application programs 745, which may include computer programs provided by various embodiments, and/or may be designed to implement methods, and/or configure systems, provided by other embodiments, as described herein. Merely by way of example, one or more procedures described with respect to the methods discussed above, such as those described in relation to FIG. 7, might be implemented as code and/or instructions executable by a computer and/or a processor within a computer; in an aspect, then, such code and/or instructions may be used to configure and/or adapt a general purpose computer or other device to perform one or more operations in accordance with the described methods.

A set of these instructions and/or code may be stored on a non-transitory computer-readable storage medium, such as the storage device(s) 725 described above. In some cases, the storage medium might be incorporated within a computer system, such as computer system 700. In other embodiments, the storage medium might be separate from a computer system e.g., a removable medium, such as a compact disc, and/or provided in an installation package, such that the storage medium may be used to program, configure, and/or adapt a general purpose computer with the instructions/code stored thereon. These instructions might take the form of executable code, which is executable by the computer system 700 and/or might take the form of source and/or installable code, which, upon compilation and/or installation on the computer system 700 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 700 to perform methods in accordance with various embodiments of the technology. According to a set of embodiments, some or all of the procedures of such methods are performed by the computer system 700 in response to processor 710 executing one or more sequences of one or more instructions, which might be incorporated into the operating system 740 and/or other code, such as an application program 745, contained in the working memory 735. Such instructions may be read into the working memory 735 from another computer-readable medium, such as one or more of the storage device(s) 725. Merely by way of example, execution of the sequences of instructions contained in the working memory 735 might cause the processor(s) 710 to perform one or more procedures of the methods described herein. Additionally or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using the computer system 700, various computer-readable media might be involved in providing instructions/code to processor(s) 710 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 725. Volatile media include, without limitation, dynamic memory, such as the working memory 735.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer may read instructions and/or code.

Various forms of computer-readable media may be involved in carrying one or more sequences of one or more instructions to the processor(s) 710 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 700.

The communications subsystem 730 and/or components thereof generally will receive signals, and the bus 705 then might carry the signals and/or the data, instructions, etc., carried by the signals to the working memory 735, from which the processor(s) 710 retrieves and executes the instructions. The instructions received by the working memory 735 may optionally be stored on a non-transitory storage device 725 either before or after execution by the processor(s) 710.

Generally, according to embodiments, the angles of objects with respect to the driving apparatus may be determined in relation to a reference line associated with the driving apparatus. For example, the reference line may be the longitudinal axis of the apparatus or the direction of travel of the driving apparatus. The angle of an object may be determined as the angle formed between the reference line and a line joining the object and a predetermined position associated with the driving apparatus. For example, the predetermined position may be located on the vehicle, and may also be located on the reference line. The predetermined position may, for example, be located in the middle of the vehicle.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations may be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A method for facilitating traveling or operation of one or more driving apparatuses, the method being implemented in one or more processors configured to execute programmed components, the method comprising:
receiving a first operating parameter of a first driving apparatus from the first driving apparatus via an unmanned aerial vehicle (UAV) network;
receiving a first driving condition from the UAV network;
generating a first instruction for adjusting the operation of the first driving apparatus based on at least one of the first operating parameter or the first driving condition; and
transmitting the first instruction to the first driving apparatus via the UAV network.

2. The method of claim 1, further comprising:
receiving a second operating parameter of a second driving apparatus from the second driving apparatus via the UAV network;
receiving a second driving condition from the UAV network;
generating a second instruction for adjusting the operation of the second driving apparatus based on at least one of the second operating parameter or the second driving condition; and
transmitting the second instruction to the second driving apparatus via the UAV network.

3. The method of claim 2, wherein the first driving condition and the second driving condition include the same driving condition information.

4. The method of any preceding claim, further comprising:
receiving a second instruction by a human operator for adjusting the operation of the first driving apparatus; and
transmitting the second instruction in real time to the first driving apparatus for adjusting the operation of the first driving apparatus.

5. The method of any preceding claim, further comprising:
determining an area relevant to the operation of the first driving apparatus based on the first operating parameter, wherein receiving the first driving condition from the UAV network comprises receiving the first driving condition of the area.

6. A system for facilitating traveling or operation of one or more driving apparatuses, the system comprising one or more processors configured by machine readable-instructions to perform:
receiving a first operating parameter of a first driving apparatus from the first driving apparatus via an unmanned aerial vehicle (UAV) network;
receiving a first driving condition from the UAV network;
generating a first instruction for adjusting the operation of the first driving apparatus based on at least one of the first operating parameter or the first driving condition; and
transmitting the first instruction to the first driving apparatus via the UAV network.

7. The system of claim 6, wherein the one or more processors are further configured by the machine readable-instructions to perform:
receiving a second operating parameter of a second driving apparatus from the second driving apparatus via the UAV network;
receiving a second driving condition from the UAV network;
generating a second instruction for adjusting the operation of the second driving apparatus based on at least one of the second operating parameter or the second driving condition; and
transmitting the second instruction to the second driving apparatus via the UAV network.

8. The system of claim 7, wherein the first driving condition and the second driving condition include the same driving condition information.

9. The system of any of claims 6 to 8, wherein the one or more processors are further configured by the machine readable-instructions to perform:
receiving a second instruction by a human operator for adjusting the operation of the first driving apparatus; and
transmitting the second instruction in real time to the first driving apparatus for adjusting the operation of the first driving apparatus.

10. The system of any of claims 6 to 9, wherein the one or more processors are further configured by the machine readable-instructions to perform:
determining an area relevant to the operation of the first driving apparatus based on the first operating parameter, wherein receiving the first driving condition from the UAV network comprises receiving the first driving condition of the area.

11. The method of any preceding method claim, or the system of any preceding system claim, wherein the UAV network comprises a plurality of UAVs, and wherein at least one of the UAVs is configured to collect images and/or videos indicative of the first driving condition.

12. The method of any preceding method claim, or the system of any preceding system claim, wherein the first driving condition is indicative of an obstacle ahead of the first driving apparatus along a traveling route of the first driving apparatus.

13. The method or system of claim 12, wherein the first driving condition is indicative of at least one of a distance of the obstacle from the first driving apparatus or an angle of the obstacle with respect to a traveling direction of the first driving apparatus.

14. The method of any preceding method claim, or the system of any preceding system claim, wherein the first operating parameter is indicative of at least one of a traveling route, a traveling destination, a traveling speed, or a traveling direction of the first driving apparatus.

15. The method of any preceding method claim, or the system of any preceding system claim, wherein the first instruction comprises at least one of an adjustment to a traveling speed of the first driving apparatus or an adjustment to a traveling direction of the first driving apparatus.
